# EUROPEAN PATENT SPECIFICATION

(11) **EP 3 598 530 B1**
(45) Date of publication and mention of the grant of the patent: **31.12.2025**
(21) Application number: 19185723.4
(22) Date of filing: 11.07.2019
(51) Int. Cl.: H01M 50/50, H01M 50/503, H01M 50/522, H01M 50/526, H01M 50/502

(54) **CONNECTION MEMBER FOR CONNECTING TO A BUSBAR OF A BATTERY, BATTERY**
VERBINDUNGSELEMENT ZUM ANSCHLUSS AN EINE STROMSCHIENE EINER BATTERIE, BATTERIE
ÉLÉMENT DE CONNEXION À UNE BARRE OMNIBUS DE BATTERIE, BATTERIE

(30) Priority: 17.07.2018 EP 18184005
(43) Date of publication of application: 22.01.2020
(73) Proprietor: Tyco Electronics Belgium EC bvba, 8020 Oostkamp (BE)
(72) Inventor: DEVOS, Peter, 8730 Beernem (BE); MAES, Henk, 9041 Oostakker (BE)
(74) Representative: Grünecker Patent- und Rechtsanwälte PartG mbB

(56) References cited:
- DE-A1- 102012 223 812
- US-A1- 2015 270 666
- US-A9- 2017 194 071

## Description

The invention relates to a connection member for connecting to a busbar of a battery. Further, the invention relates to a battery having such a connection member.

Such a connection member is used to connect a battery cell of the battery to a busbar attached to a support structure for the battery cell. Such batteries are however subjected to movements, leading to relative movement between the battery cell and the busbar.

In order to provide a solution that allows for such a movement without losing the connection, a connection member for connecting to a busbar of a battery, can comprise a first section adapted for being connected to a battery cell and a second section adapted for being connected to the busbar attached to a support structure for the battery cell, wherein the connection member comprises at least two bends between the first section and the second section.

A corresponding battery comprises a battery cell, a busbar attached to a support structure for the battery cell and a corresponding connection member.

Due to the two bends, the connection member is flexible.

An intermediate section between the two bends can comprise two layers. The two layers can be sheet metal layers.

DE 10 2012 223812 A1 shows that a connection element of a battery cell can comprise an elastic section between a section next to the battery cell and a section for contacting a bus bar. US 2015/270666 A1 shows an assembly comprising two parts made from sheet metal, each having two bends, and a bridging element. In US 2017/194071 A9, a conductor has several layers of sheet metal that are attached to each other.

It is an object of the invention to provide a solution with an increased flexibility.

According to the invention, this is achieved when the two layers are spaced from each other.

The solution according to the invention can further be improved by the following further developments and advantageous developments, which are independent of each other and can be combined arbitrarily, as desired.

The curvature of one bend can be reverse to the curvature of the other bend. For example, one bend can be a right turn bend and the other bend can be a left turn bend. The resulting connection member can have a Z- or S-shape, at least in sections. This can make the production and the assembly simple.

In an advantageous development, a plane of the first section can be parallel to and spaced from a plane of the second section. Such a configuration can be space saving.

An angle of one bend can be equal to the angle of the other bend to achieve that the first section and the second section are parallel.

At least one of the two bends can be a 90 degree bend. Such a bend can be easy to produce.

For a simple production, an intermediate section between the two bends can be straight. In alternative configurations, the section can also be curved or have a different shape.

In order to achieve a higher flexibility, a section between the two bends comprises two layers. The two layers can be independent and movable relatively to each other.

The two layers are spaced from each other to increase flexibility.

The two layers are sheet metal layers. Such a configuration achieves a higher flexibility at least in one direction while providing stability in other directions.

Preferably, the two layers extend from the first section to the second section. By this, a high degree of flexibility is achieved.

The entire connection member can consist of sheet metal. This can make the production easy. Further, such an embodiment can be lightweight and stable at the same time.

In an advantageous embodiment, at least one of the layers can also be part of a battery cell connector adapted for connecting two battery cells. Such a connection member can thus have a double function and simplify the design of the battery.

In order to allow for a simple attachment process, the second section can be adapted for being welded to the busbar of the support structure. In particular, it can be adapted for being welded by ultrasound. This welding method can make the production efficient. To achieve such a weldability, the second section can comprise a flat section. With such a flat section, a welding device can be applied.

The first section can be an end section of the connection member. The resulting connection member can thus be compact.

Similarly, the second section can be an end section of the connection member.

A contact area at the first section and/or the second section can be planar, so that contacting is easy.

In an advantageous development of a battery, a perpendicular projection of one of the bends onto the busbar can be at least partially located in a contact area of the busbar. This saves space.

Also for space saving, an end section can be positioned over the busbar leaving more space for the ultrasonic welding. The end section can project beyond the busbar. The welding sonotrode can be positioned in a projection at a border of the busbar while the overlap keeps the sealing properties unaffected. In the other case, for example when the end section terminates flush with the busbar, for example with a side face of the busbar, a distance between the end section and the sonotrode has to be respected.

To simplify the production, the busbar can be straight. This is in particular possible due to the advantageous design of the connection member.

In the mounted position, the second section can be located below the first section.

The invention will now be described in greater detail and in an exemplary manner, using advantageous embodiments and with reference to the drawings. The described embodiments are only possible configurations in which, however, the individual features as described above can be provided independently of one another or can be omitted.

In the Figs.:
Fig. 1 shows a schematic side view of a first embodiment of a connection member on a battery;
Fig. 2 shows a schematic side view of the connection member with the bus bar;
Fig. 3 shows a schematic perspective view of the connection member;
Fig. 4 shows a schematic perspective view of the connection member together with the busbar;
Fig. 5 shows a schematic side view of the connection member attached to the bus bar in two different states;
Fig. 6 shows a schematic side view of the connection member attached to the busbar together with a sonotrode;
Fig. 7 shows a schematic perspective view of the contact member attached to the busbar together with the sonotrode;
Fig. 8 shows a schematic side view of the second embodiment of a connection member together with the bus bar;
Fig. 9 shows a schematic perspective view of the first embodiment of the connection member together with further elements of the battery with a cover shown transparently;
Fig. 10 shows the embodiment of fig. 9 with the cover in opaque;
Fig. 11 shows a schematic perspective view of the application of sealing material to the first embodiment of the connection member;
Fig. 12 shows a further schematic perspective view of the application of sealing material to the first embodiment of the connection member.

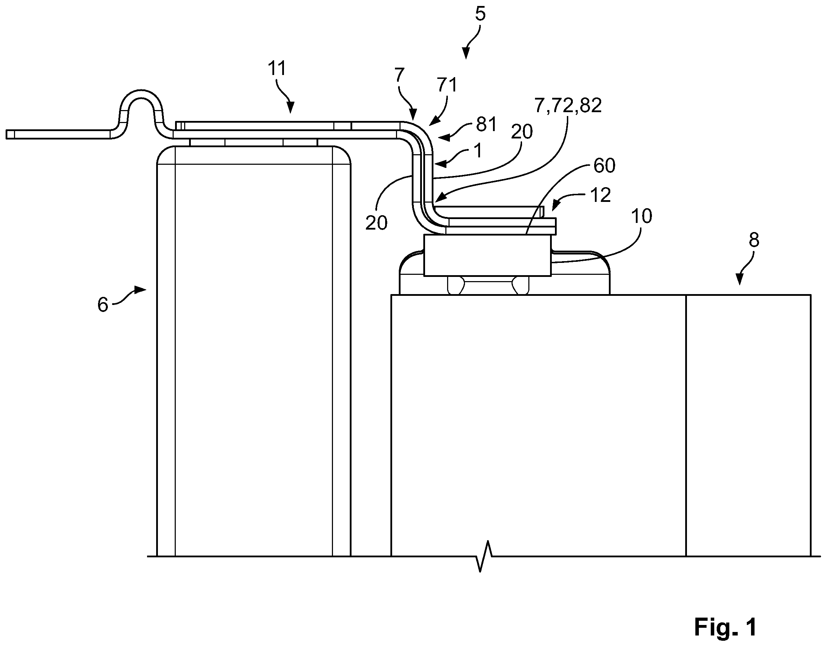

In Fig. 1, a connection member 1 that is used for connecting a battery cell 6 of a battery 5 to a busbar 10 attached to a support structure 8 for the battery cell 6 is shown. The support structure 8 can provide mechanical support and stability for the battery 5.

The battery cell 6 is the last in a line of battery cells 6. This battery cell 6 has to be connected electrically to the busbar 10.

The busbar 10 conducts the current and voltage accumulated from the battery cells 6. The busbar 10 is attached to a support structure 8 that mechanically supports the battery cells 6. During certain operations, for example during the mounting of the busbar 10 or when an electric vehicle to which the battery 5 is attached, moves, the battery cells 6 can move relatively to the support structure 8 and thus the busbar 10. Therefore, a certain movability between the battery cells 6 and the busbar 10 is necessary to maintain the electric connection between the battery cells 6 and the busbar 10.

To provide such flexibility, the connection member 1 comprises a first bend 7, 71 and a second bend 7, 72 that are located between a first section 11, at which the connection member 1 is connected to the battery cell 6, and a second section 12, where the connection member 1 is connected to the busbar 10.

The curvature of the first bend 7, 71 is reverse or counter to the curvature of the second bend 7, 72. The first bend 7, 71 is a right turn bend 81, while the second bend 7, 72 is a left turn bend 82. The connection member 1 thus has an S- or Z-shape.

In the relaxed state, the first bend 7, 71 has an angle 101 of 90°. The second bend 7, 72 in this relaxed state also has an angle 102 of 90°. As a result, a plane 110, which is defined by the first section 11, is parallel and spaced by a distance 150 to a plane 120 defined by the second section 12. The first section 11 and the second section 12 can thus move relative to each other without big mechanical stresses on other sections 11, 12 and without losing electrical contact.

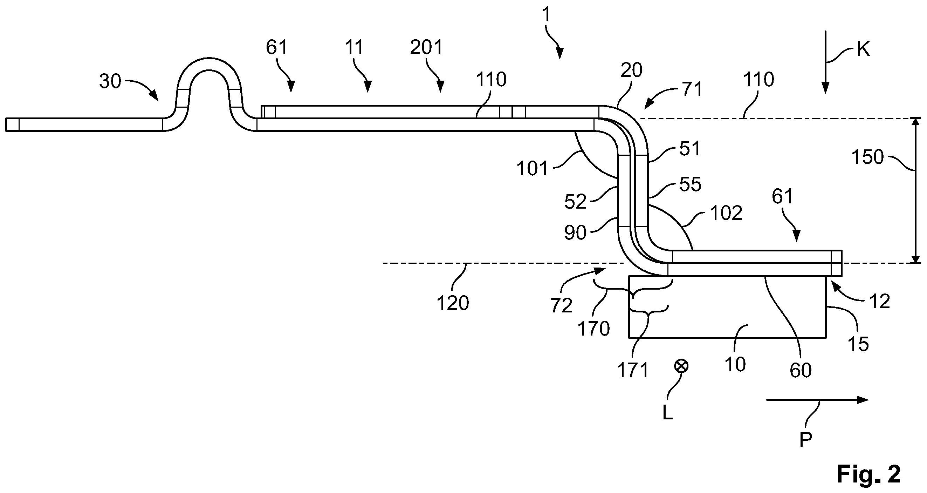

As can be seen for example in Fig. 2, an intermediate section 90 between the first bend 7, 71 and the second bend 7, 72 comprises two layers 50, 51, 52. Between the two layers 50, 51, 52, a gap 55 exists so that the two layers 50, 51, 52 are spaced from each other. Each of the layers is made of sheet metal. As a result, the connection member 1 has a higher flexibility than compared to a configuration in which the intermediate section 90 is a single, thicker element. The intermediate section 90 is straight, in order to keep the production simple.

The spacing between the two layers 50, 51, 52 also avoids friction between the two layers 50, 52, 51 which adds further flexibility. In order to maximize this flexibility, the two layer structure extends from the first section 11 to the second section 12. In this embodiment, the two layers 50, 51, 52 extend at least from the first section 11 to the second section 12.

The second section 12 is an end section 61 of the connection member 1. Both layers 50, 51, 52 terminate at the second section 12.

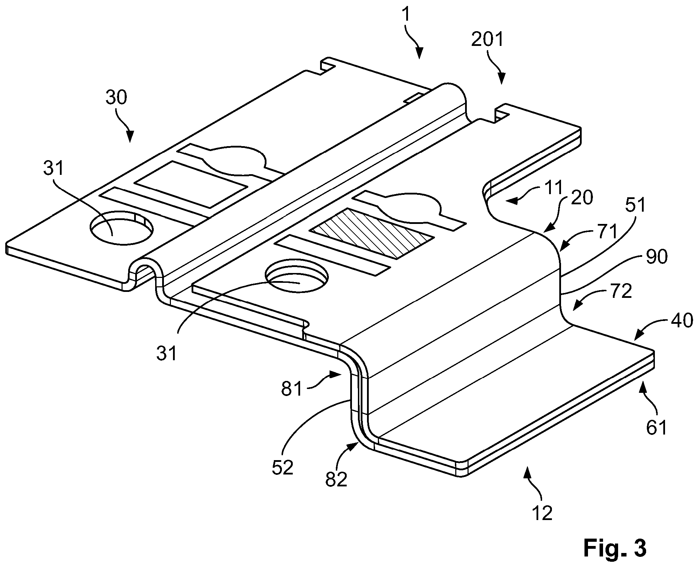

For the first section 12, however, the situation is different. The first layer 51 ends in the first section 11, but the second layer 52 extends further and forms part of a battery cell connector 30 which is used to connect two battery cells 31 to each other. For example, as can be seen in Fig. 3, holes 31 are present to allow a contacting of the pins of the electrodes (not shown) of the battery cells 6.

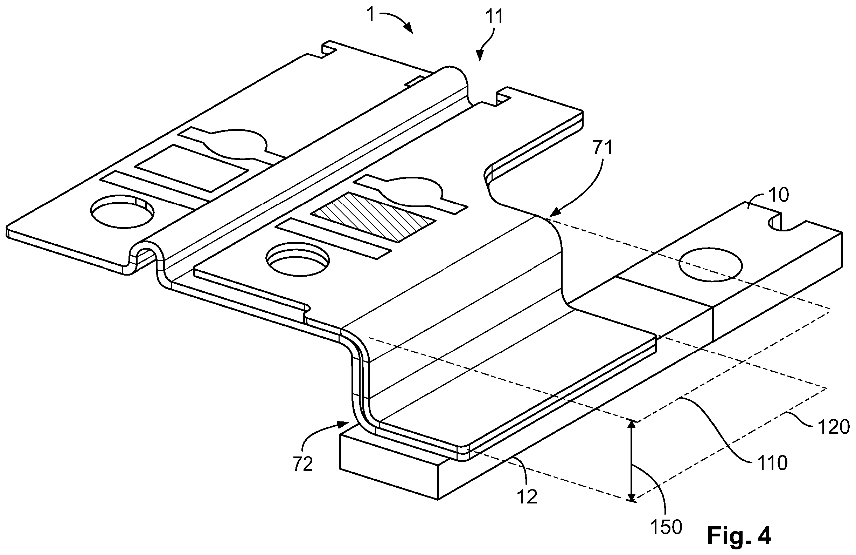

As can be seen in Fig. 4, the second section 12 can be welded to the busbar 10. Due to the distance 150 between the two planes 110, 120, the busbar 10 can be straight and does not have to be bent upwards which would require a difficult manufacturing step.

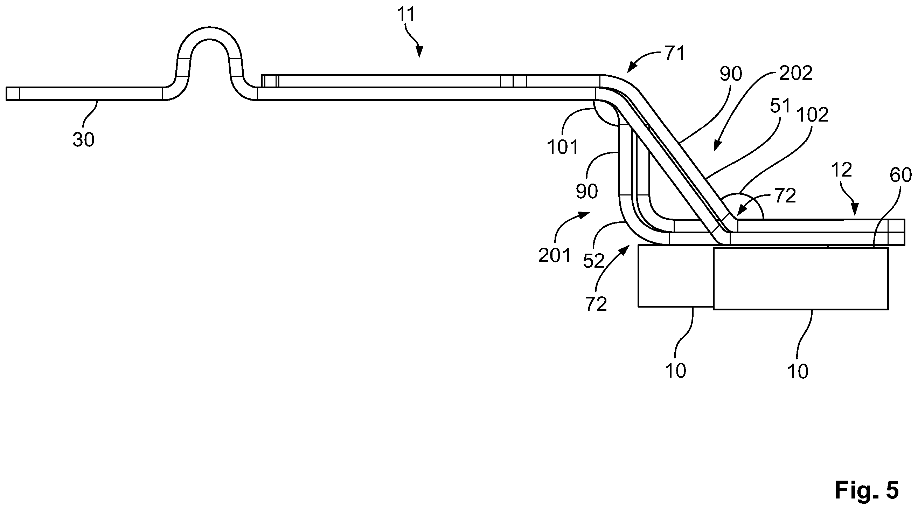

In Fig. 5, the advantage of an added flexibility can be seen. Two states of the connection member 1 are shown. A first, relaxed state 201 corresponds to the state shown for example in Fig. 2. In a second state 202, force is applied to the battery cells 6 and/or the bus bar 10, so that a relative movement between the two is present and a distance between the two is greater than in the first, relaxed state 201. As a result, the first section 11 and the second section 12 also move relatively to each other and the connection member 1 is in a more straight configuration. The angles 101, 102 of the first bend 7, 71, 72 are now greater. The shown bending can be reversible so that the connection member can go back to the configuration in Fig. 2.

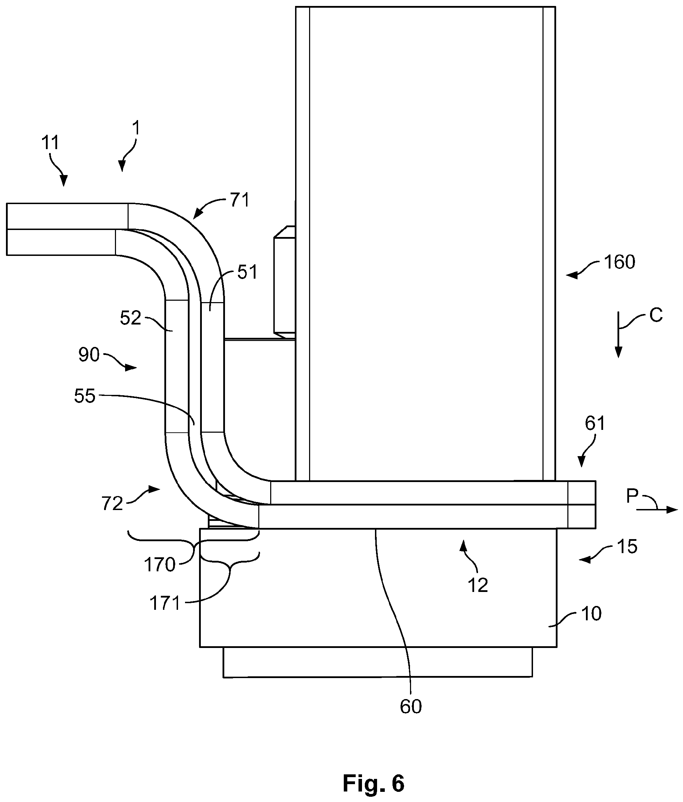

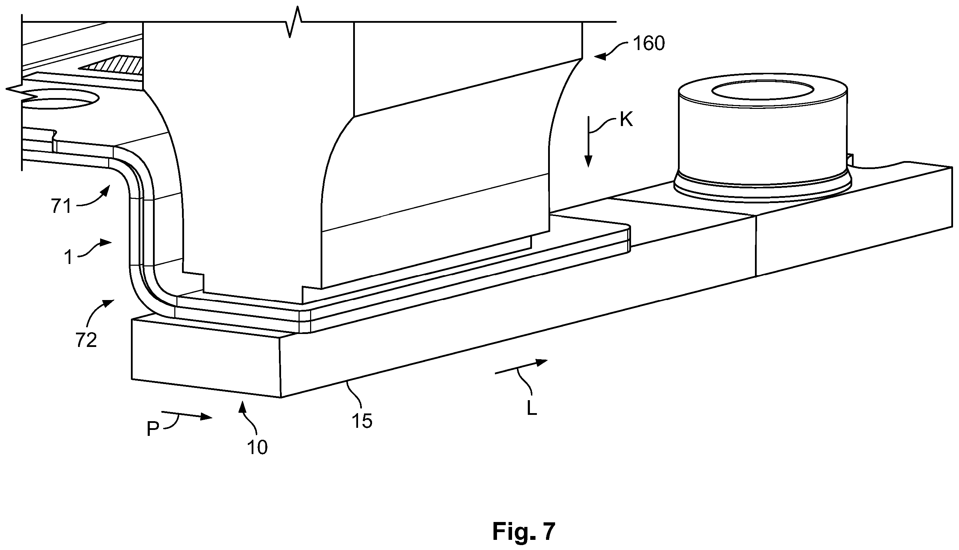

In Figs. 6 and 7, the welding process is shown, in which the second section 12 is welded to a contact area 60 of the busbar 10. A sonotrode 60 pushes the second section 12 along a contacting direction C against the busbar 60. The application of ultrasound then results in a connection between the second section 12 and the busbar 60. As can be seen best in Fig. 6, the connection member 1 is located above the contact area 60 in such a way that at least a part 171 of the projection 170 of the bends 7, 71, 72 is located in the contact area 60. This saves space in a perpendicular direction P that is perpendicular to the contacting direction C and a longitudinal direction L in which the bus bar 10 extends.

Similarly, the first section 11 can be attached to the battery cell 6, for example by welding.

Also for space saving, the end section 61, can be positioned over the busbar 10 leaving more space for the ultrasonic welding. The welding sonotrode 160 can be positioned in a projection at the border of the busbar 10 while the overlap keeps the sealing properties unaffected. The end section 61, here the second section 12, projects beyond a side face 15 of the busbar 10.

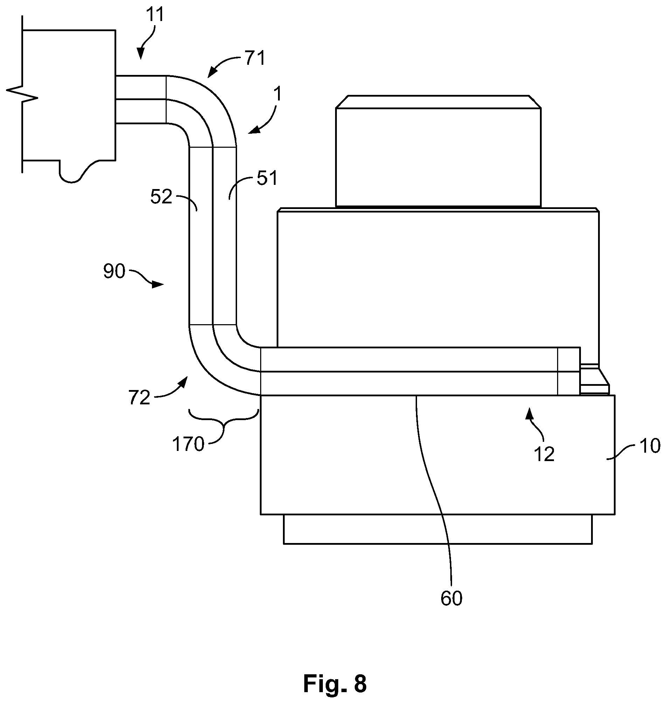

In Fig. 8, a further embodiment is shown in which the two bends 7, 71, 72 are not located above the contact area 60 of the busbar 10 and thus a projection 170 of the two bend 7, 71, 72 is not located over the contact area 60. Such an embodiment can be easier to produce.

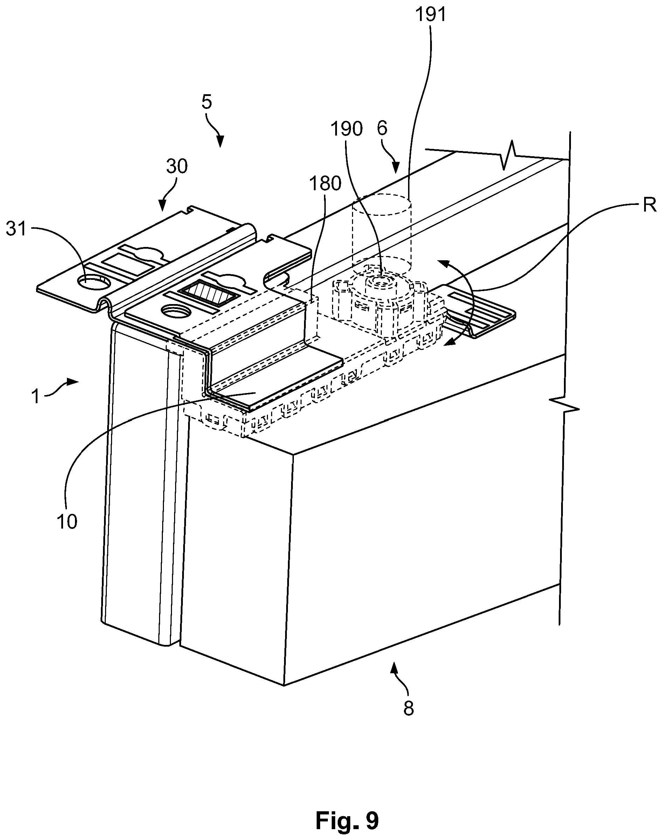

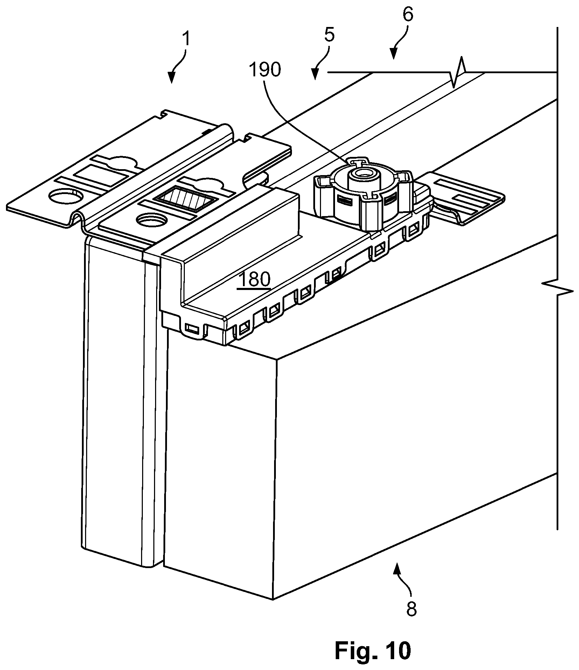

In Figs. 9 and 10, the connection member 1 is shown attached to the battery cell 6. In Fig. 9, a cover 180 is shown transparent. Further, a tool 191 for fixing a fixing element 190, for example a screw, is shown schematically. When this tool 191 is operated by rotating, a force is applied to the connection member 1. Due to the advantageous configuration, however, this force only has little effect on the connection between the battery cell 6 and the busbar 10, as the connection member 1 allows for a movement between the two.

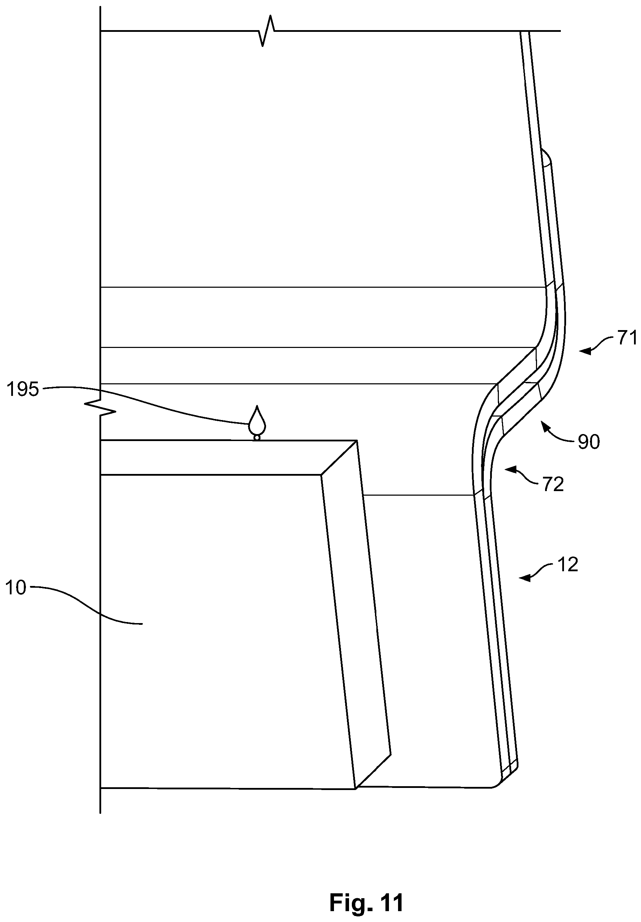

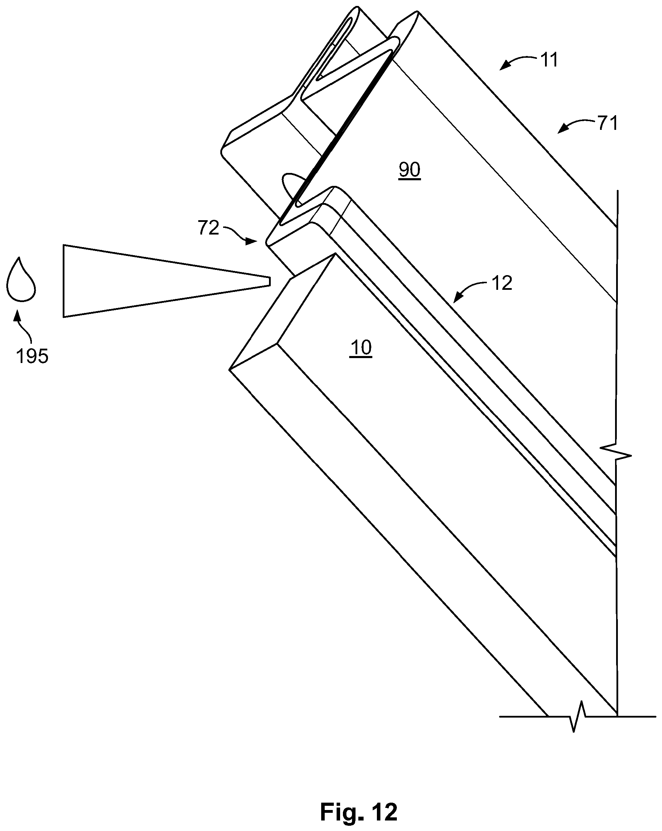

As can be seen in Figs. 11 and 12, a sealing material 195 can be applied easily, for example at the funnel-like section between the bus bar 10 and the second section 12.

### REFERENCE NUMERALS

- 1: connection member
- 5: battery
- 6: battery cell
- 7: bend
- 8: support structure
- 10: bus bar
- 11: first section
- 12: second section
- 15: side face
- 20: sheet metal
- 30: battery cell connector
- 31: hole
- 40: flat section
- 50: layer
- 51: first layer
- 52: second layer
- 55: gap
- 60: contact area
- 61: end section
- 71: first bend
- 72: second bend
- 81: right turn bend
- 82: left turn bend
- 90: intermediate section
- 101: first angle
- 102: second angle
- 110: first plane
- 120: second plane
- 150: distance
- 160: sonotrode
- 170: projection
- 171: part of projection
- 180: cover
- 190: fixing means
- 195: sealing material
- 201: first state
- 202: second state
- C: contact direction
- P: perpendicular direction
- L: longitudinal direction

## Claims

1. Connection member (1) for connecting to a busbar (10) of a battery (5), comprising a first section (11) adapted for being connected to a battery cell (6) and a second section (12) adapted for being connected to the busbar (10) attached to a support structure (8) for the battery cell (6), wherein the connection member (1) comprises at least two bends (7), (71), (72) between the first section (11) and the second section (12), wherein an intermediate section (90) between the two bends comprises two layers (50, 51, 52), and wherein the two layers (50, 51, 52) are sheet metal layers, **characterized in that** the two layers (50, 51, 52) are spaced from each other.

2. Connection member (1) according to claim 1, wherein the curvature of one bend (7, 71) is reverse to the curvature of the other bend (7, 72).

3. Connection member (1) according to one of claims 1 or 2, wherein a plane of the first section is parallel to and spaced from a plane of the second section.

4. Connection member (1) according to one of claims 1 to 3, wherein an intermediate section (90) between the two bends (7, 71, 72) is straight.

5. Connection member (1) according to one of claims 1 to 4, wherein the two layers (50), (51, 52) extend from the first section (11) to the second section (12).

6. Connection member according to one of claims 1 to 5, wherein at least one of the layers (50, 51, 52) is also part of a battery cell connector (30) adapted for connecting two battery cells (6).

7. Connection member one according to one of claims 1 to 6, wherein the second section (12) is adapted for being welded to the busbar (10) of the support structure (8).

8. Connection member one according to one of claims 1 to 7, wherein the first section (11) is an end section (61) of the connection member (1).

9. Connection member one according to one of claims 1 to 8, wherein the second section (12) is an end section (61) of the connection member (1).

10. Battery (5), in particular for an electrical vehicle, comprising a battery cell (6), a busbar (10) attached to a support structure (8) for the battery cell (6), and a connection member (1) according to one of claims 1 to 9.

11. Battery (5) according to claim 10, wherein a perpendicular projection (170) of one of the bends (7, 71, 72) onto the busbar (10) is at least partially located in a contact area (60) of the busbar (10).

12. Battery (5) according to claim 10 or 11, wherein the busbar (10) is straight.

## Patentansprüche

1. Verbindungselement (1) zum Verbinden mit einer Sammelschiene (10) einer Batterie (5), mit einem ersten Abschnitt (11), der zum Verbinden mit einer Batteriezelle (6) ausgelegt ist, und einem zweiten Abschnitt (12), der zum Verbinden mit der Sammelschiene (10) ausgelegt ist, die an einer Stützstruktur (8) für die Batteriezelle angebracht ist (6) befestigt ist, wobei das Verbindungselement (1) mindestens zwei Biegungen (7), (71), (72) zwischen dem ersten Abschnitt (11) und dem zweiten Abschnitt (12) aufweist, wobei ein Zwischenabschnitt (90) zwischen den beiden Biegungen zwei Schichten (50, 51, 52) aufweist und wobei die beiden Schichten (50, 51, 52) Blechlagen sind, **dadurch gekennzeichnet, dass** die beiden Lagen (50, 51, 52) voneinander beabstandet sind.

2. Verbindungselement (1) nach Anspruch 1, wobei die Krümmung einer Biegung (7, 71) der Krümmung der anderen Biegung (7, 72) entgegengesetzt ist.

3. Verbindungselement (1) nach einem der Ansprüche 1 oder 2, wobei eine Ebene des ersten Abschnitts parallel zu einer Ebene des zweiten Abschnitts verläuft und von dieser beabstandet ist.

4. Verbindungselement (1) nach einem der Ansprüche 1 bis 3, wobei ein Zwischenabschnitt (90) zwischen den beiden Biegungen (7, 71, 72) gerade ist.

5. Verbindungselement (1) nach einem der Ansprüche 1 bis 4, wobei sich die beiden Schichten (50), (51, 52) vom ersten Abschnitt (11) zum zweiten Abschnitt (12) erstrecken.

6. Verbindungselement nach einem der Ansprüche 1 bis 5, wobei mindestens eine der Schichten (50, 51, 52) auch Teil eines Batteriezellenverbinders (30) ist, der zum Verbinden zweier Batteriezellen (6) ausgelegt ist.

7. Verbindungselement gemäß einem der Ansprüche 1 bis 6, wobei der zweite Abschnitt (12) zum Verschweißen mit der Sammelschiene (10) der Stützstruktur (8) ausgelegt ist.

8. Verbindungselement gemäß einem der Ansprüche 1 bis 7, wobei der erste Abschnitt (11) ein Endabschnitt (61) des Verbindungselements (1) ist.

9. Verbindungselement 1 gemäß einem der Ansprüche 1 bis 8, wobei der zweite Abschnitt (12) ein Endabschnitt (61) des Verbindungselements (1) ist.

10. Batterie (5), insbesondere für ein Elektrofahrzeug, mit einer Batteriezelle (6), einer an einer Tragstruktur (8) für die Batteriezelle (6) befestigten Sammelschiene (10) und einem Verbindungselement (1) gemäß einem der Ansprüche 1 bis 9.

11. Batterie (5) nach Anspruch 10, wobei eine senkrechte Projektion (170) einer der Biegungen (7, 71, 72) auf die Sammelschiene (10) zumindest teilweise in einem Kontaktbereich (60) der Sammelschiene (10) liegt.

12. Batterie (5) nach Anspruch 10 oder 11, wobei die Sammelschiene (10) gerade ist.

## Revendications

1. Élément de connexion (1) à un jeu de barres (10) d'une batterie (5), comprenant une première section (11) adaptée pour être connectée à un élément de batterie (6) et une deuxième section (12) adaptée pour être connectée au jeu de barres (10) fixé à une structure de support (8) pour l'élément de batterie (6), dans lequel l'élément de connexion (1) comprend au moins deux coudes (7), (71), (72) entre la première section (11) et la deuxième section (12), dans lequel une section intermédiaire (90) entre les deux coudes comprend deux couches (50, 51, 52), et dans lequel les deux couches (50, 51, 52) sont des couches de tôle, **caractérisées en ce que** les deux couches (50, 51, 52) sont espacées l'une de l'autre.

2. Élément de connexion (1) selon la revendication 1, dans lequel la courbure d'un coude (7, 71) est inversée par rapport à la courbure de l'autre coude (7, 72).

3. Élément de connexion (1) selon l'une des revendications 1 ou 2, dans lequel un plan de la première section est parallèle à un plan de la deuxième section et espacé de celui-ci.

4. Élément de connexion (1) selon l'une des revendications 1 à 3, dans lequel une section intermédiaire (90) entre les deux coudes (7, 71, 72) est rectiligne.

5. Élément de connexion (1) selon l'une des revendications 1 à 4, dans lequel les deux couches (50), (51, 52) s'étendent de la première section (11) vers la deuxième section (12).

6. Élément de connexion selon l'une des revendications 1 à 5, dans lequel au moins une des couches (50, 51, 52) fait également partie d'un connecteur d'éléments de batterie (30) adapté pour connecter deux éléments de batterie (6).

7. Élément de connexion selon l'une des revendications 1 à 6, dans lequel la deuxième section (12) est adapté pour être connecté par soudage au jeu de barres (10) de la structure de support (8).

8. Élément de connexion selon l'une des revendications 1 à 7, dans lequel la première section (11) est une section d'extrémité (61) de l'élément de connexion (1).

9. Élément de connexion selon l'une des revendications 1 à 8, dans lequel la deuxième section (12) est une section d'extrémité (61) de l'élément de connexion (1).

10. Batterie (5), notamment pour véhicule électrique, comprenant un élément de batterie (6), un jeu de barres (10) connecté à une structure de support (8) de l'élément de batterie (6), et un élément de connexion (1) selon l'une des revendications 1 à 9.

11. Batterie (5) selon la revendication 10, dans laquelle une projection perpendiculaire (170) de l'un des coudes (7, 71, 72) sur le jeu de barres (10) est au moins partiellement située dans une zone de contact (60) du jeu de barres (10).

12. Batterie (5) selon la revendication 10 ou 11, dans laquelle le jeu de barres (10) est rectiligne.
